# EUROPEAN PATENT SPECIFICATION

(11) **EP 1 605 855 B1**
(45) Date of publication and mention of the grant of the patent: **31.12.2008**
(21) Application number: 04757942.0
(22) Date of filing: 19.03.2004
(51) Int. Cl.: A61C 1/00

(54) **DENTAL HANDPIECE AND EQUIPMENT**
DENTALES HANDSTÜCK UND AUSRÜSTUNG
PIECE A MAIN ET EQUIPEMENT DENTAIRE

(30) Priority: 21.03.2003 US 456389 P
(43) Date of publication of application: 21.12.2005
(73) Proprietor: DENTSPLY INTERNATIONAL, INC., York, PA 17405-0872 (US)
(72) Inventor: PAPANEK, Tom, Lake Forest, IL 60045 (US); ZDANOWSKI, Chester, Westmont, IL 60559 (US); BRENNAN, Kevin, Rogers, Arlington Heights, IL 60004 (US)
(74) Representative: Hartz, Nikolai
(86) International application number: PCT/US2004/008590
(87) International publication number: WO 2004/084754

(56) References cited:
- WO-A-89/09571
- DE-C- 19 549 662

## Description

Dental electric motor handpieces currently on the market all have some form of motor control unit. These currently take one of several forms:
1. The manufacturer of the electric motor handpiece provides the motor controller electronics in an enclosure ("control box"). This box contains the motor control electronics and connections to the motor. It may contain a power supply to convert AC line voltage to the required DC voltages, or the power supply may be external and connected to the control box by a cord. Typically, air and water are provided to this control box from the dental unit, and this air and water is then routed from the control box to the electric motor handpiece. The control box may be variously placed on a counter in the dental operatory, placed temporarily on the tray of the dental unit, or attached to the dental unit chair or tray. Examples of this configuration are KaVo's model *EWL4890* and BienAir's model *Optima US.* User controls on the control box may range from minimal (eg on/off and speed control , no displays on BienAir's *Optima US* to complex (eg speed and torque controls and displays on various controllers for endodontic electric motors made by Nouvag, ATR, Tulsa Dental, and others).
2. In one variation of this first case, KaVo's *EWL4890* provides the capability to remove the front control panel from the box and remotely mount it, using an optional cable.
3. The manufacturer of the electric motor handpiece provides a circuit board or small module which is installed within the dental unit. Controls, if any may then be separately mounted on the dental unit. For example, the BienAir *PLPE970FO.*
4. The manufacturer of the electric motor handpiece, in collaboration with the manufacturer of the dental unit, may fully integrate the control electronics into the dental unit. In this case, user input controls are typically integrated into the unit's button panel or touch-screen. For example, dental units sold in Europe by Sirona, KaVo, Faro, and others.

Each of these present forms has one or more deficiencies, viz.:
1. In form 1 above, if the control box is placed on the counter controls will be difficult to reach. If attached to the dental unit, typically under the tray, the controls will be difficult to reach or view.
2. In form 2, KaVo has partially addressed the deficiency of form 1, but has added additional complexity to the insulation (mounting two components and routing an additional cable between them). Further, the separation between the control box and display is limited by the length of cable. Further, the control panel cannot readily be relocated.
3. Form 3, for example the BienAir *PLPE970F,* typically has no displays and limited controls. Further, installation may involve drilling multiple holes for switches and control knobs, and running individual wires to each control device.
4. Form 4 is limited to systems which are factory installed by the dental unit manufacturer, or in which the dental unit has been designed and pre-built to accommodate an electric motor controller. Most units built prior to circa 1995 will not have this capability, so the majority of the installed base cannot use this form.
Document DE 195 49662 discloses a dental handpiece control system according to the preamble of claim 1.
The invention consists of a dental handpiece control system as specified in claim 1.

### BRIEF DESCRIPTION OF THE DRAWINGS

See attached block diagram, developed by consultants Bit7 under contract to Professional/Midwest. See also attached photographs of illustrative existing electric motor systems.

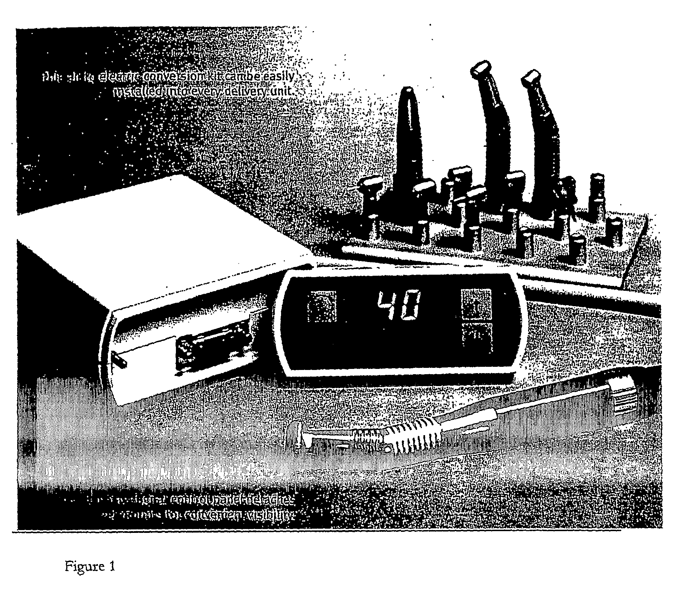

Figure 1- device with detachable front panel and cable connector

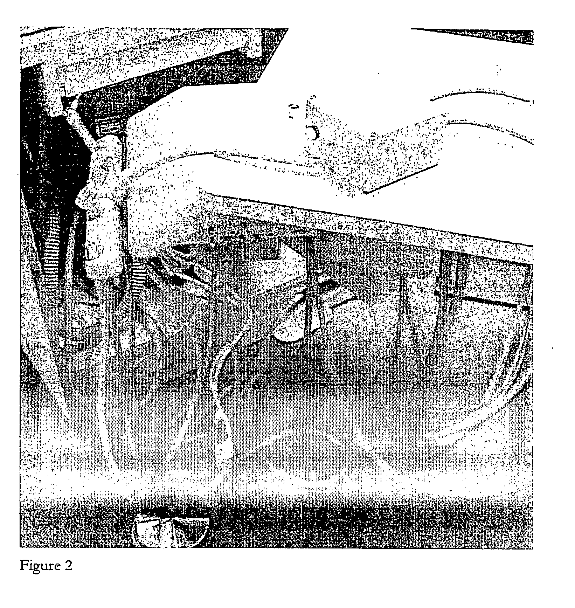

Figure 2 - Handpiece placed on a dental unit tray

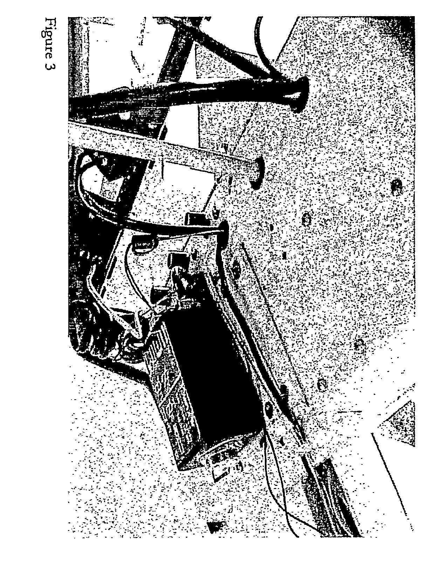

Figure 3 - Handpiece mounted to underside of a dental unit tray

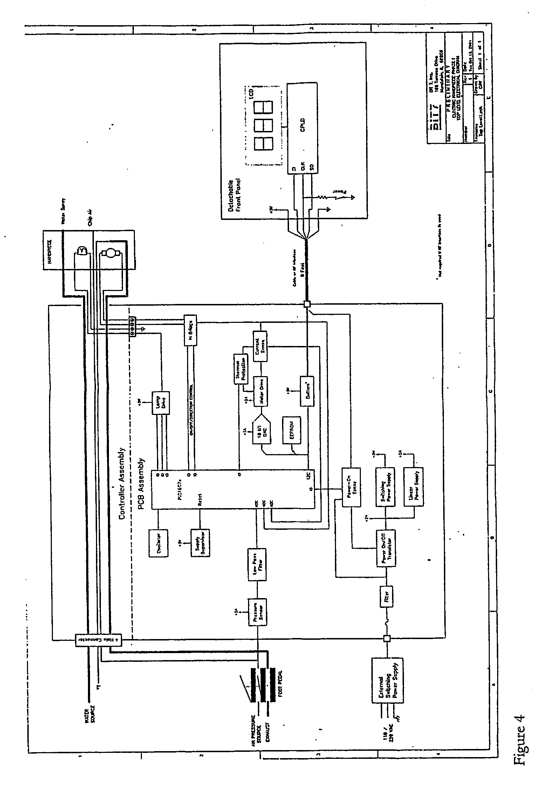

Figure 4 - remote control which can be either wired or RF wireless

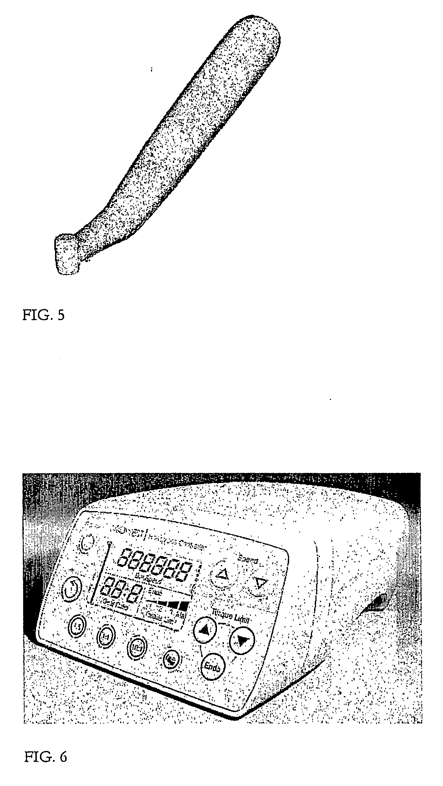

Figure 5 - Inventive handpiece (contra-angle attached to motor)

Figure 6 - Inventive controller

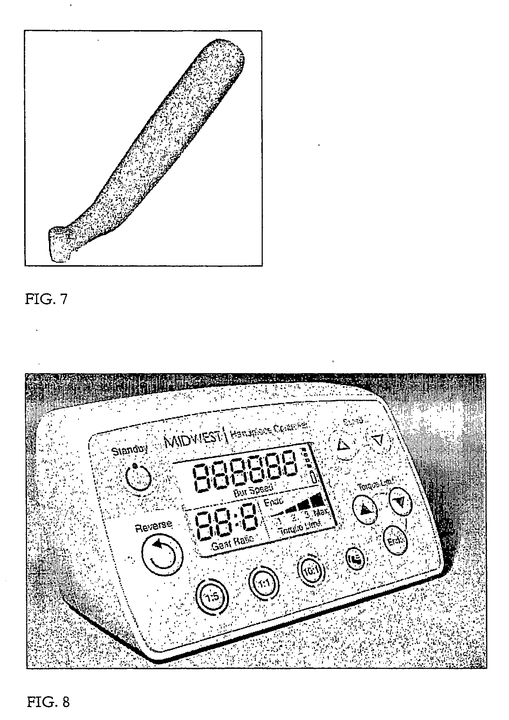

Figure 7 - Inventive electric motor handpiece (contra-angle attached to motor)

Figure 8 - Inventive control panel

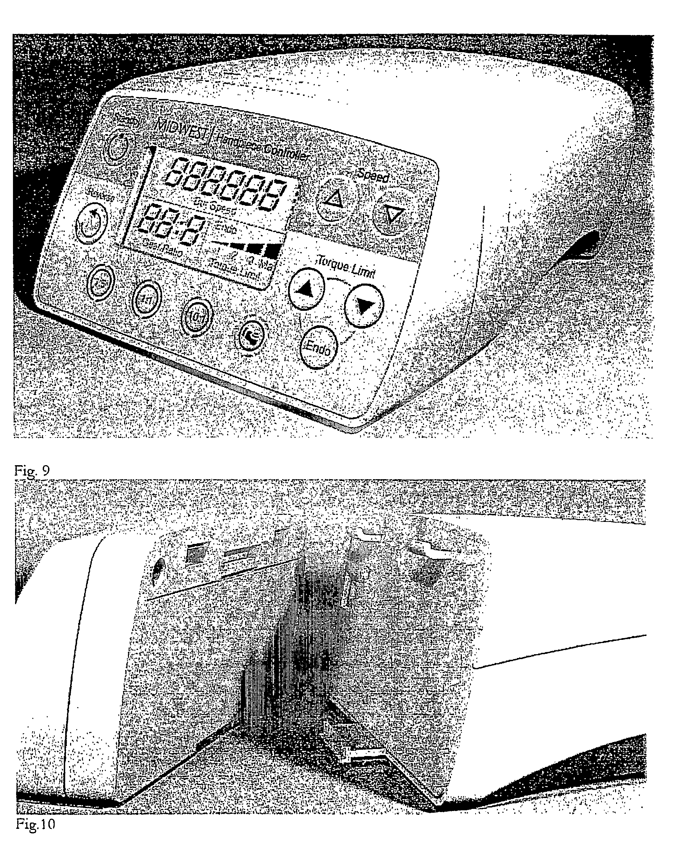

Figure 9 - Conplete control electronics, with RDCU (remote display control unit) attached to CU (control unit).

Figure 10 - Showing RDCU being unsnapped from CU.

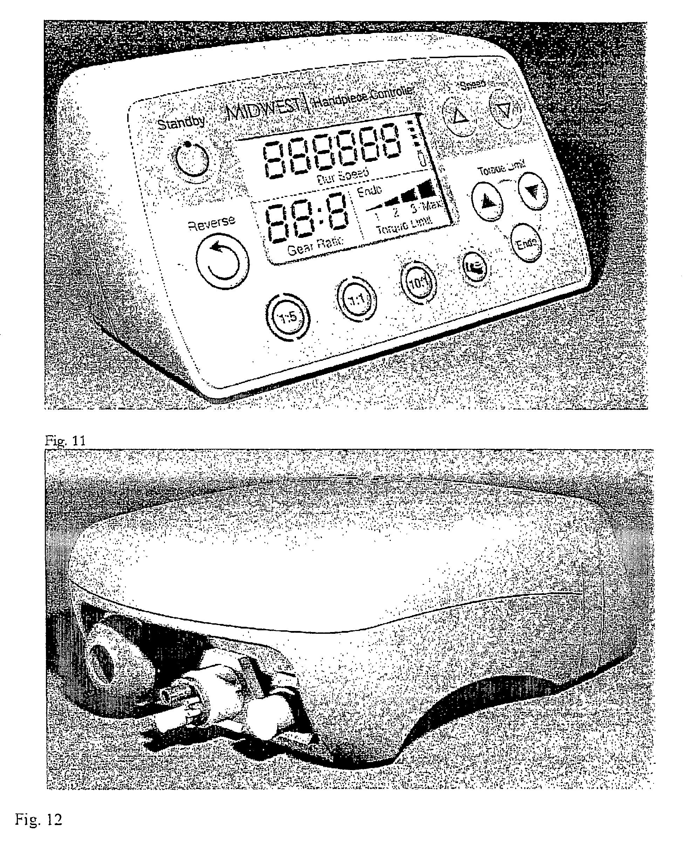

Figure 11 - RDCU detached from CU.

Figure 12 - is a rear view of CU showing input and output connections.

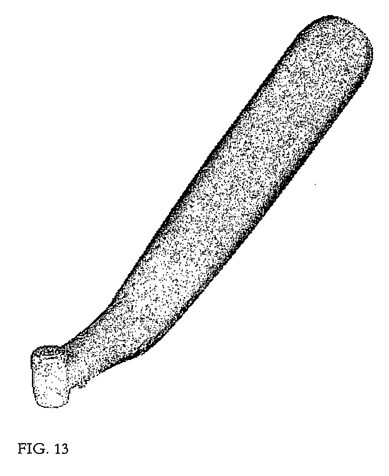

Figure 13 - Typical contra-angle attachment mounted to motor. (There are several contra-angles with different internal gear ratios, and with or without spray and illumination, but all have substantially the same shape and appearance).

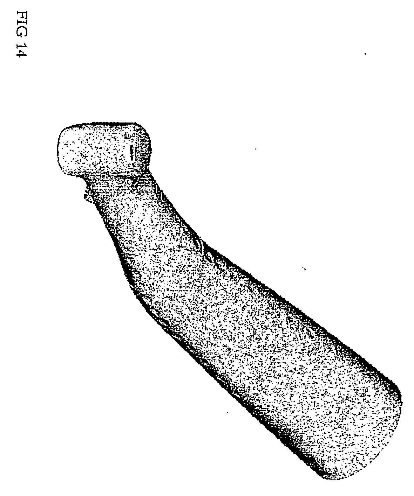

Figure 14 - Typical contra-angle, removed from motor.

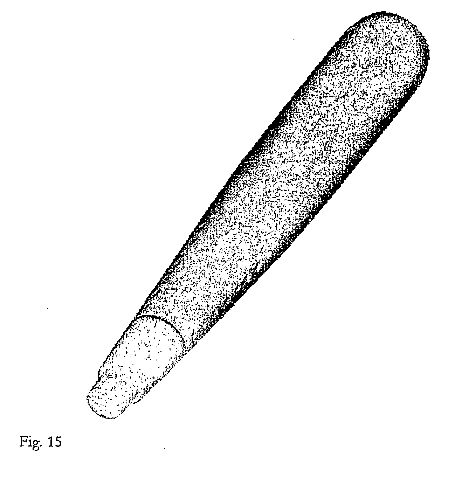

Figure 15 - Straight attachment (1:1 gear ratio) mounted to motor.

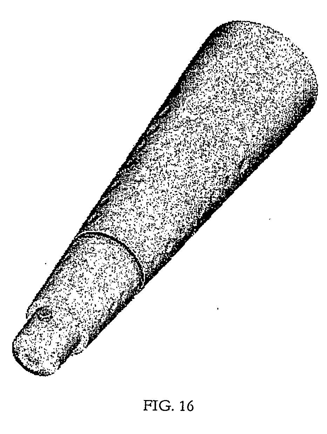

Figure 16 - Straight attachment (1:1 gear ratio), separate from motor.

### DESCRIPTION OF THE PREFERRED EMBODIMENTS

The envisioned electric motor system consists of the following major elements:

An electric motor, similar to the DC brush or brushless motors currently used in dental handpieces, with speed range approximately 500 - 40,000 rpm and a suitable coupling to accept a number of different attachments and contra-angles

A hose, similar to those existing, which connects the motor to the control unit and carries the required motor current, illumination bulb current, chip-air, spray water, and cooling air to the motor

A motor control unit, similar to those existing, which may be in the form of an unenclosed circuit board to be mounted in the dental unit or an enclosed circuit board to be mounted on the dental unit or elsewhere. The inventive feature of the control electronics are circuits for bi-directional wireless communication between the circuit board and the remote display and control module.

A unique remote display and control module (RDCM), which has circuits for bi-directional wireless communication with the motor control unit. This communication would preferably be RF using an industry standard communication protocol such as BlueTooth, but could be any form of wireless or infrared communication. The RDCM has on its face the necessary displays and controls for conveniently operating the motor. Control inputs may be maximum speed, maximum torque, attachment gear ratio, and the like. Display outputs may be actual speed, actual torque, error messages, and the like. The RDCM is preferably battery powered, but may also be powered with a low voltage power supply. The RDCM would typically be placed in a cradle mounted in any convenient location on the dental unit, but could also be hand-held, in the manner of a television remote control.

As in current electric motor dental systems, the output of the dental unit foot control (pneumatic or electrical) would provide an input signal to the motor control unit so the dental practitioner can conveniently vary motor speed. Such foot pedals may also have controls for spray water and the like, which are not altered by the electric motor system.

Several variations are mentioned in Description above, including:
- radio frequency or infrared wireless communication
- different protocols and frequency bands for wireless communication
- remote control unit powered by battery powered or power supply
- remote unit in a mounted or hand-held configuration
- motor control electronics either enclosed for external mounting or bare board for internal mounting

Other variations could include:
- various forms of controls and displays on the remote unit
- various combinations of controls and displays on the main controller, the dental unit, and the remote control
- the remote control configured as a foot control, including the case with displays in the foot control unit
- the described invention in combination with a wireless foot control

The devices available today for driving dental rotary instruments in general operative dentistry are:
- Low-speed air motors, typically running at 6,000 rpm with output torque approximately 10 in -oz.
- Low-speed electric motors, with typical operating speeds from 100 rpm to 40,000 rpm and output torque of 3 in-oz or less.
- A wide range of attachments for these low-speed air-motors and electric motors. Some attachments have gear reduction (eg 4:1 or 7:1) to obtain the very low speeds needed for applications such as endodontics and implantology. Others have speed increasing gears (eg 1:4) to reach high speeds nearly equivalent to the speed of an air-turbine during cutting. Most attachments are in a contra-angle handpiece configuration, though straight configurations are also available. In addition, many suppliers provide a wide range of removable heads to accommodate different bur shanks. Other heads have internal mechanisms to provide special motions for endodontics or polishing.
- High speed air-turbine handpieces which have free speeds of 325,000 to 450,000 rpm, though speeds can drop to 160,000 when load is applied during use. Output torque of these air-turbines is typically 0.1 in-oz at cutting speeds. None of these present devices is ideal for the full range of dental applications:
- Low speed air motors are used primarily in a limited number of applications, such as prophylaxis, chair-side work, and caries removal.
- Although electric motor and attachment systems can span the complete range of applications, including high-speed, they require the user to purchase and maintain a number of different attachments.
- Air turbines are simple to use and produce excellent results in cutting applications such as cavity preparation or crown preparation, but cannot be run at low speeds and have low power relative to an electric motor.

The present invention combines the best attributes of the electric motor system and the high-speed air turbine as follows:
- It will be capable of operation over the speed range approximately 100 rpm to 200,000 rpm, without attachments.
- It will be a simple, integrated system.
- It will have the spray and illumination of a highspeed handpiece.
- It will be comparable in size and weight to a highspeed handpiece.
- It will have torque comparable to an electric system, and will have speed and torque control.

The device will be a handpiece of shape and configuration similar to present highspeed handpieces, with a unitary rear sheath, contra-angle sheath, and head. Optionally, the head only will be removable, to allow variations in cutting instruments accommodated (eg friction grip shank, latch shank, 2.3mm shank, 1.6mm shank, endo files, etc). Fiber optic illumination and air-water spray will be integrated into the handpiece. If heads are removable, spray may be routed through the head or incorporated into the contra-angle.

An electric motor will be mounted in the rear sheath of the handpiece. The motor may be a brushless DC motor, in which case it may remain in the handpiece during sterilization. Alternately, the motor may be removable from the rear of the handpiece to allow sterilization with less motor damage. If the motor is a DC brush type, it must be of the removable configuration, as DC brush motors have very limited sterilization life.

The primary inventive feature is that the motor will have an operating speed range of approximately 100 rpm to 200,000 rpm. Thus, a single motor will be suitable for the full range of operative dental procedures without need for any gear-up or gear-down attachments. Such motors are available today from a limited number of suppliers, viz. Transcoil and Koford, both located in the United States. Brushless DC motors from these manufacturers have suitable torque, speed, and size.

A "drive-train" of shafts, bearing supports, and gears will transmit the motor rotation from the rear sheath, though the bent portion of the contra-angle sheath, and too the head. Preferably, the drive-train has an overall fixed 1:1 gear ratio, though moderate gear-up or gear down (eg 1:1.2) might be used to optimize output speed and motor performance. Note this is in marked contrast to electric motor systems today, which use optional contra-angle attachments with gear ratios ranging from 1:7 (speed-reducing) up to 5:1 (speed increasing).

If the head is integrated to the contra-angle sheath, a final right-angle gear set drives the chuck assembly which holds the cutting instrument. Again, this gear preferably has a fixed 1:1 gear ratio, though moderate gear-up or gear down (eg 1:1.2) might be used to optimize performance.

A hose interface will be located at the back-end of the rear sheath. The hose may be non-removably attached, as is conventionally done with electric motors for surgery. Alternately, there may be a coupling for easy hose removal, as is done for air-turbine handpieces and BienAir's electric motor system. Alternately, there may be a coupling intended for occasional, but not routine disconnect, as is done in KaVo's electric motor system.

As is done in electric motor systems today, the hose will provide air for motor cooling, air and water for spray, electrical energy for the illumination bulb, and electrical energy for the motor. Depending on motor type, signals from the motor will also be carried through the hose. At its opposite end, the motor will connect to an electronic motor controller, much as is done in electric motor systems today.

The gear train within the handpiece may have user selectable gear ratios.

Other forms are described above (removable vs. fixed heads; removable motor; brush vs. brushless motor; permanently attached hose vs. removable hose.)

An electric motor dental system suitable for use in both general dentistry and for use with rotary endodontic files.

There are four broad classes of electric motor handpieces and systems in dentistry today:

Electric motor handpieces for general (operative and restorative) dentistry. These are made by KaVo, BienAir, NSK, and others. They typically comprise a motor, a series of contra-angle and straight attachments, and a control unit. The motors typically are DC brush type with operating speeds up to 20,000 or 40,000 rpm, are not sterilizable, have channels for chip-air and water, have an illuminating bulb, and are air-cooled. The attachments come in a variety of gear ratios (increasing, 1:1, and decreasing), in both contra-angle and straight configuration, accommodate either 1.6mm or 2.35mm shank cutting instruments, have fiber-optic illumination, and air-water spray. A hose connects the motor to a controller, carrying electrical current to the motor and bulb, cooling air, chip-air, and water. The controllers typically have some provision for setting maximum motor speed, and may display motor speed or calculated bur speed. Motor speed is controlled via the sensed pressure of the air supplied from the dental unit, as modulated by the existing pneumatic foot pedal.

Electric motor systems intended to be used with rotary files for endodontic procedures. These are made by Nouvag, Tulsa Dental, Aseptico, ATR, and others They typically comprise a motor, one or two contra-angles, and a control unit. The motors are DC brush or brushless types with operating speeds up to 20,000 or 40,000 rpm, are often sterilizable, and have no provision for chip-air, water, or illumination. The attachments come in one or two decreasing gear ratios (eg 18:1) in a contra-angle configuration, accommodate only 2.35mm rotary files, and have no fiber-optic illumination or air-water spray. A hose connects the motor to a controller, carrying electrical current to the motor. The controllers typically have complex controls for setting motor speeds and motor torque depending on the type of file used. To prevent file breakage, most have some form of "toque limiting" in which the motor is reversed or stopped when a set file torque is sensed. Motor speed is controlled via a dedicated electric foot pedal. There is also a battery operated, handheld, endodontic handpiece made by J Morita.

Surgical motor systems for use in implantology and dental surgery. These are made by KaVo, BienAir, and others. They typically comprise a motor, a contra-angle and straight attachment, a control unit, and a water supply system. The motors are DC brushless type with operating speeds up to 40,000 rpm, are sterilizable, have an illuminating bulb, and are air-cooled. The attachments come in a variety of gear ratios (increasing, 1:1, and decreasing), in both contra-angle and straight configuration, accommodate primarily 2.35mm shank cutting instruments, and have fiber-optic illumination. Sterile spray water is provided from a pump or other supply to the handpiece via an external tube. A sterilizable hose connects the motor to a controller, carrying electrical current and cooling air. The controllers typically have some provision for setting maximum motor speed, and may display motor speed or calculated bur speed. Motor speed is controlled via a dedicated electric foot pedal.

Laboratory motors, for general work outside the mouth. These are made by numerous manufacturers and are similar to "Dremel" tools used by hobbyists. They typically comprise an integrated motor/handpiece and a control unit. The motors typically are DC brush type without illumination or spray. The controllers typically have some provision for setting maximum motor speed Motor speed is controlled via a knob on the control unit or with an electric foot pedal.

There is currently no single electric motor system which can be used for the full range of dental applications and procedures. While Inventive does not purport to be ideal for all four of the application areas above, it is uniquely designed to be used in both general dentistry and endodontics, could be adapted to implantology, and can also be used for laboratory work.

The current invention provides an electric motor driven dental handpiece system with various attachments, intended for cutting, shaping, and polishing procedures in general dentistry, as well as for use with rotary endodontic files.

The system consists of:
- an 24 volt DC electric motor;
- an electronic motor controller;
- a remote display and control unit;
- a hose connecting the motor to the controller;
- a number of different contra-angle and straight attachments.

Its features include:
- fiber optics for illumination (except in the straight attachment);
- all stainless steel external construction for corrosion resistance;
- motor speed and torque control from 500 - 40,000 rpm;
- multi-port air-water spray for cooling in selected attachments;
- push-button chucking mechanism to grip cutting instruments with ISO standard shanks;
- a range of contra-angle and straight attachments;
- compatible with existing hose and foot-pedal in the dental operatory;
- wireless remote control.
- torque-limit control for use with endodontic rotary files

### ALTERNATE FORMS

The inventive system could be adapted for use in implantology with the following changes:
o a brushless, sterilizable, motor

- a sterilizable hose between motor and controller
- an external pump or other means to supply external sterile water to the handpiece

The inventive concept is the combination of features and operating modes. Other embodiments encompassed by this concept could include:
- different types of attachments
- attachments without spray or without fiber-optics
- different physical forms of controller
- additional control features, such as pre-programmed speeds and torque limits

Provides the dentist with a single product which can be used for both general dentistry and endodontic procedures. This can reduce cost, installation complexity, maintenance, and space requirements.

Means to indicate reverse operation of dental electric handpiece.

Electric motor handpieces currently used for rotary file endodontics typically have a feature called "torque limit", in which the motor is automatically reversed to prevent file breakage when a pre-defined torque limit is sensed. Electric motor endodontic systems typically signal such automatic motor reversal by an audible alarm. Audible alarms have several problems in the dental operatory: (1) increases patient anxiety; (2) may not be heard by the clinician; (3) may be confused with audible alarms by other devices. Other endodontic systems may not signal the user in any way, so the clinician must depend on their tactile feel to detect excess file torque and motor reversal. This has several problems: (1) clinician may continue to advance the file even though torque limit has been exceeded, increasing the risk of file breakage; (2) clinician may fail to pull the file out to clear debris from the root canal; (3) clinician may believe the file is still cutting, which is not the case when it is spinning in the reverse direction.

The inventive system has a unique combination of features: it has the bulb and fiber optic illumination of a general purpose electric motor handpiece and it has the torque-limiting and automatic motor reverse feature of a dedicated rotary endodontic handpiece. This combination of features allows us to implement a unique form of signal - modulation of the illumination lamp.

There is a bulb mounted within the present motor. Electrical power is supplied to this bulb from the control unit, via the same hose which supplies electrical power to the motor as well as air and water. The various attachments which mount to the motor have within them a fiber-optic rod which carries light energy from the motor bulb to the head of the handpiece, providing illumination upon the cutting instrument and working area within the oral cavity.

The inventive improvement is as follows: whenever the motor is automatically reversed due to torque limit, the lamp will be automatically dimmed to approximately 75% of full power. Since this automatic reversal is brief (eg 2 seconds) the lamp is only momentarily dimmed. A power reduction of about 75% is sufficient to be perceived without impeding the clinician's ability to see within the oral cavity.

(Note that this dimming of the handpiece illumination is distinct from any "reverse" indicator, such as an LED, on the motor control unit.)

Since power to the lamp is controlled by the same electronic hardware and software as detect torque limit and control the electric motor, it is a simple matter to vary the operating modes of dimming. For example, the lamp could be pulsed on and off; the lamp could be pulsed between full power and reduced power; the percent power in "dim" mode could be any value less than 100% which is perceptible to the user; the user could choose to have the feature enabled or not; the user could tailor the feature to their own needs.

This same concept of controlled lamp dimming could be used to indicate any other alarms or operating modes of the system, for example, when the user has manually selected reverse.

The concept of lamp dimming as a signaling means is not dependent on the physical embodiment herein described, and other means of providing illumination and modulating that illumination should fall within the scope of this invention.
1. The invention does not have any of the above listed disadvantages of audible alarms.
2. The invention adds little or no additional hardware or cost to the system, since a bulb must already be provided and controlled.

Embodied in the Midwest Inventive electric motor handpiece system. Reference Dentsply Professional-West project MW-40.

The invention also provides controller exterior shapes have the following distinguishing characteristics:
1. A unique, non-rectangular shape with curved surfaces of varying radii.
2. A separable display and control module, which can be readily attached to the main control module with molded-in snap means. These same snap means on the display and control module may also be used to attach it to several different mounting stands or brackets.
3. A sloped front on the display and control module for improved visibility and control access.
4. A recessed area at the rear of the main control module, where the various input and output cables and tubes are located.
5. Unique appearance.
6. Small size.

Detachable control and display module (RDCU), with wireless (RF) link to the base control module (CU).

The inventive electric motor contra-angle handpieces (comprised of a contra-angle attachment and a motor) have an exterior shape with the following distinguishing characteristics:

A head and neck with an integrated complex shape. This is similar to the existing Midwest Stylus handpieces. This integrated design is unlike most existing handpieces (eg KaVo, prior Midwest products, BienAir, W&H, Lares, Star, etc) in which the head is a cylindrical form attached at right angles to a cylindrical neck. There are a few competitive handpieces with similar integrated shapes, viz. NSK 85L, W&H contra-angle attachments, and Sirona T1 series.

A neck portion which has a semi-rectangular cross- section, in contrast to the typical round cross section of most other handpieces.

A neck which smoothly transitions to a front sheath with semi-rectangular cross section.

A gradually increasing diameter from the front sheath, through the elbow, to the rear sheath.

A smooth transition, without change in diameter, between the attachment rear sheath and the motor sheath.

A grip pattern on the sheaths comprised of dimples, created by machining or similar means.

A uniform roughened surface texture created by bead blasting or similar means, providing additional grip in the user's hand.

The Inventive electric straight handpieces (comprised of a straight attachment and a motor) have an exterior shape with the following distinguishing characteristics:

A gradually increasing diameter from the front sheath to the rear sheath which provides improved feel of the handpiece in the users' hand.

A smooth transition, without change in diameter, between the attachment rear sheath and the motor sheath.

A grip pattern on the various sheaths comprised of dimples, created by machining or similar means.

A uniform roughened surface texture created by bead blasting or similar means, providing additional grip in the user's hand.

Unique appearance; Improved feel and comfort; and Easier cleaning, without deep "knurling" to catch debris.

It is to be appreciated that the present invention can be employed with any air driven handpiece or dental lowspeed air motor with or without an illumination means, as well as to any independent dental illumination source such as head mounted lamps. Further, different states could be signaled by different dimming or flashing patterns. The signaling could also be accomplished by momentarily changing the color of the illumination source (e.g. by color filter in an Insight fiber optic source, or with colored LED's in future LED illuminated handpieces). The present invention provides signaling of a system state or status by dimming or otherwise altering the appearance of the dental illumination device in a visually recognizable manner.

## Claims

1. A dental handpiece control system comprising:
(i) a motor control unit comprising a circuit;
(ii) a dental handpiece electric motor;
(iii) a torque-limiting and automatic motor reverse feature;
(iv) a display and control module for monitoring and affecting changes to the dental handpiece motor, and
(v) a bi-directional wireless communication between said motor control unit and said display and control module, such that the parameters of operation of the handpiece can be selectively adjusted; said parameters including those selected from the group consisting of handpiece motor torque, speed, gear ratios and combinations thereof,
**characterized in that**
(vi) - said dental handpiece motor has an operating speed range of 100 to 200,000 rpm;
(vii) - said system comprises a bulb lamp and fiber optic illumination; and
(viii) - the power to said lamp is controlled by the same electronic hardware and software as detect torque limit and control the electric motor, such that whenever the motor is automatically reversed due to torque limit, the lamp will be automatically dimmed,

## Patentansprüche

1. Dentalhandstück-Steuersystem, umfassend:
(i) eine Motorsteuereinheit, die eine Schaltung aufweist;
(ii) einen Dentalhandstück-Elektromotor;
(iii) ein Drehmomentbegrenzungs- und automatisches Motorwendeelement;
(iv) einen Anzeige- und Steuermodul zur Überwachung und Veränderung des Dentalhandstück-Motors; und
(v) eine zweifach gerichtete drahtlose Kommunikation zwischen der Motorsteuereinheit und dem Anzeige- und Steuermodul so, dass die Parameter des Betriebs des Handstücks selektiv eingestellt werden können; wobei die Parameter solche umfassen, die ausgewählt sind aus der Gruppe bestehend aus Handstück-Motordrehmoment, Geschwindigkeit, Übersetzungsverhältnis und Kombinationen davon;
**dadurch gekennzeichnet, dass**
(vi) der Dentalhandstück-Motor einen Betriebsdrehzahlbereich von 100 bis 200.000 UpM aufweist;
(vii) das System eine Kolbenlampen- und Faseroptikillumination umfasst;
(viii) der Strom zur Lampe durch die gleiche elektronische Hardware und Software gesteuert wird, die die Drehmomentbegrenzung ermittelt und den Elektromotor so steuert, dass, wenn der Motor aufgrund der Drehmomentbegrenzung automatisch gewendet wird, die Lampe automatisch gedämpft wird.

## Revendications

1. Système de commande d'une pièce à main dentaire, comportant :
(i) une unité de commande de moteur comprenant un circuit ;
(ii) un moteur électrique de pièce à main dentaire ;
(iii) un moyen de limitation de couple et d'inversion automatique de sens du moteur ;
(iv) un module d'affichage et de commande destiné à contrôler et à imposer des changements au moteur de la pièce à main dentaire, et
(v) une communication sans fil bidirectionnelle entre ladite unité de commande du moteur et ledit module d'affichage et de commande, telle que les paramètres de fonctionnement de la pièce à main puissent être réglés sélectivement ; lesdits paramètres comprenant ceux sélectionnés dans le groupe constitué du couple, de la vitesse, des rapports d'engrenage et de combinaisons de ceux-ci du moteur de la pièce à main,
**caractérisé en ce que**
(vi) ledit moteur de la pièce à main dentaire a une plage de vitesse de fonctionnement de 100 à 200 000 tours par minute ;
(vii) ledit système comporte un éclairage à lampe et fibre optique ; et
(viii) la puissance fournie à ladite lampe est commandée par le même matériel électronique et le même logiciel que ceux qui détectent une limite de couple et commandent le moteur électrique, de manière que, lorsque le sens du moteur est inversé automatiquement du fait d'une limite du couple, la lumière de la lampe soit automatiquement baissée.
